# EUROPÄISCHE PATENTSCHRIFT

(11) **EP 3 033 265 B1**
(45) Veröffentlichungstag und Bekanntmachung des Hinweises auf die Patenterteilung: **14.02.2018**
(21) Anmeldenummer: 14742512.8
(22) Anmeldetag: 24.07.2014
(51) Int. Cl.: B62D 27/02, B62D 29/04

(54) **VERFAHREN ZUR HERSTELLUNG EINER BAUGRUPPE**
METHOD FOR PRODUCING AN ASSEMBLY
PROCEDE DE FABRICATION D'UN ENSEMBLE

(30) Priorität: 13.08.2013 DE 102013216026
(43) Veröffentlichungstag der Anmeldung: 22.06.2016
(73) Patentinhaber: Bayerische Motoren Werke Aktiengesellschaft, 80809 München (DE)
(72) Erfinder: SCHNAUFER, Thomas, 82386 Oberhausen (DE); WOLF, Christian, 80634 München (DE); BEIL, Andreas, 80935 München (DE)
(86) Internationale Anmeldenummer: PCT/EP2014/065864
(87) Internationale Veröffentlichungsnummer: WO 2015/022159

(56) Entgegenhaltungen:
- WO-A1-2009/001910
- WO-A2-2004/074026
- DE-A1-102004 046 960
- DE-A1-102005 001 201
- US-A- 6 047 626
- US-A1- 2004 188 885

## Beschreibung

Die Erfindung betrifft ein Verfahren zum Herstellen einer Baugruppe aus mindestens drei Bauteilen.

Heutige Fahrzeuge weisen als tragendes Element eine selbsttragende Karosserie auf. Die selbsttragende Karosserie wird aus Einzelteilen im Rohbau zusammengesetzt. Im bisherigen Stand der Technik sind die funktionalen Teile der Rohbaukarosserie aus Stahl oder Aluminium, so dass sich zum Fügen dieser Teile Schweißverfahren anbieten. Neben der Schweißtechnik ist es auch bekannt, die Einzelteile der Rohbaukarosserie zu verkleben oder zu vernieten.

Diese Methode hat jedoch Nachteile dahingehend, dass bei dem Fügen des Rohbaus eine große Anzahl an Fügestufen benötigt wird. Dadurch erhöht sich die Komplexität des Fügeprozesses. Ferner wird auch eine Vielzahl von Vorrichtungen benötigt, zum Fügen der einzelnen Teile. Hinzu kommt, dass nur bestimmte Materialpaarungen möglich sind, da nicht jede Materialpaarungsverbindung kraftschlüssig möglich ist.

Aus der US 2004/0188885 A1 sind eine Zusammenbaugruppe einer Instrumententafel und ein Verfahren zu dessen Herstellung bekannt. Die Zusammenbaugruppe beinhaltet vorzugsweise eine oder mehr Rahmenelemente oder Strukturen, die zumindest teilweise aus Kunststoff ausgebildet sind.

Die WO 2009/001910 A1 zeigt eine Trägerstruktur für ein Fahrzeug. Die Trägerstruktur beinhaltet einen Träger, eine äußere Frontverzierung, ein dreieckiges Fenster und einen Abschirmbereich.

Aus der US 6,047,626 ist eine Verankerungsbaugruppe bekannt, zur Befestigung von Innenverkleidungspaneelen von Kraftfahrzeugen.

Ausgehend von diesem Stand der Technik macht es sich die vorliegende Erfindung zur Aufgabe, ein vereinfachtes Verfahren anzugeben, mit dem die Nachteile des Standes der Technik überwunden werden. Ferner ist es Aufgabe der Erfindung, ein Verfahren anzugeben, mit dem die Herstellung einer Bauteilanordnung realisierbar ist und das ein Mindestmaß an Fügekomplexität aufweist.

Diese Aufgabe wird durch ein Verfahren mit den Merkmalen des unabhängigen Anspruchs gelöst. Die abhängigen Ansprüche stellen vorteilhafte Ausführungsformen der Erfindung dar.

Zur Lösung dieser Aufgabe schlägt die Erfindung ein Verfahren zum Herstellen einer Baugruppe aus mindestens drei Bauteilen vor, mit den Schritten Erzeugen einer Unterbaugruppe durch Verbinden eines ersten Bauteils mit einem zweiten Bauteil, Anordnen der Unterbaugruppe an dem dritten Bauteil, wobei das erste Bauteil das zweite Bauteil durch eine stoff- und/oder formschlüssige Verbindung miteinander verbunden werden und wobei die Baugruppe durch eine kraft- und/oder stoffschlüssige Verbindung an dem dritten Bauteil angeordnet wird. Durch die Einführung einer Zwischenbaustufe, kann beim Zusammenbau des Karosserierohbaus eine Fügestufe eingespart werden. Dadurch wird die Komplexität des Fügeprozesses bei der Rohbaufertigung reduziert.

Darüber hinaus kann die stoff- und/oder formschlüssige Verbindung zwischen dem ersten und dem zweiten Bauteil durch eine Clips-Verbindung erzeugt werden. Hieraus ergibt sich der Vorteil, dass eine stoff- und/oder formschlüssige Kombination unterschiedlichster Materialpaarungen ermöglicht wird, die mit üblichen Verbindungstechniken nicht verbindbar sind.

Weiterhin kann die stoffschlüssige Verbindung zwischen der Unterbaugruppe und dem dritten Bauteil durch Kleben erzeugt werden. Dieser Klebeprozess integriert die geclipste Verbindung des ersten Bauteils mit dem zweiten Bauteil, d.h. die Unterbaugruppe strukturfest in die Rohkarosserie. Zusätzlicher oder alternativ kann die Unterbaugruppe auch mit einer kraftschlüssigen Verbindung an dem dritten Bauteil befestigt werden, beispielsweise durch eine Verschraubung.

In einer bevorzugten Ausführungsform der Erfindung sind die Bauteile aus unterschiedlichen Materialien ausgebildet. Dabei kann das erste Bauteil aus Kunststoff, das zweite Bauteil aus Aluminium und das dritte Bauteil aus einem faserverstärkten Kunststoff ausgebildet sein.

Das im Vorhergehenden beschriebene Verfahren eignet sich insbesondere zum Verbinden eines Schotts mit einer Türscharnierverstärkung, um die erste Unterbaugruppe zu erzeugen und dann die Unterbaugruppe mit einer A-Säule zu verbinden. Die A-Säule kann bevorzugt aus einem faserverstärkten Material, bspw. Glas, Kohle, Aramid, Basalt und/oder Naturfaser sein, die in einer Matrix aus thermoplastischem oder duroplastischem Kunststoff eingebettet ist. Das erste Bauteil, d.h. das Schott kann dabei als kohlefaserverstärktes Bauteil im Sheet Moulding Compound Verfahren (SMC) hergestellt sein.

Im Folgenden wird die Erfindung anhand der Figurenbeschreibung näher erläutert. Die Ansprüche, die Figuren und die Beschreibung enthalten eine Vielzahl von Merkmalen, die im Folgenden im Zusammenhang mit beispielhaft beschriebenen Ausführungsformen der vorliegenden Erfindung erläutert werden. Der Fachmann wird diese Merkmale auch einzeln und in anderen Kombinationen betrachten, um weitere Ausführungsformen zu bilden, die an entsprechende Anwendungen der Erfindung angepasst sind.

Es zeigen in schematischer Darstellung:
- Fig. 1: eine perspektivische Ansicht einer Baugruppe, hergestellt nach dem erfinderischen Verfahren,
- Fig. 2: eine Draufsicht auf eine Unterbaugruppe,
- Fig. 2a: eine Schnittansicht entlang der Schnittlinie A-A aus Fig. 2,
- Fig. 2b: eine Schnittansicht entlang der Schnittlinie B-B aus Fig. 2 und
- Fig. 3: eine Schnittansicht durch eine alternative Ausführungsform einer Unterbaugruppe.

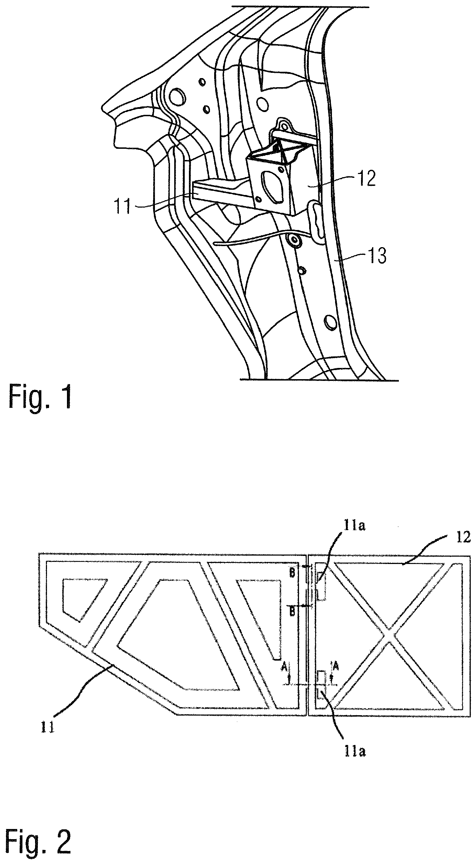

In Fig. 1 ist ein erstes Bauteil 11 als Schott dargestellt. Dieses Schott 11 ist über eine Clips-Verbindung mit einer Scharnierverstärkung 12 verbunden. Die Scharnierverstärkung 12 mit daran angeordnetem Schott 11 ist auf ein drittes Bauteil 13 aufgeklebt. Dieses dritte Bauteil 13 ist bspw. ein Seitenrahmen einer Kraftfahrzeugrohkarosserie, wobei in dem Bereich der A-Säule die Scharnierverstärkung 12 aufgeklebt ist. Der Seitenrahmen bzw. das dritte Bauteil 13 ist dabei aus kohlenstofffaserverstärktem Kunststoff ausgebildet. Die Scharnierverstärkung ist aus einem Alu-Strangpressprofil hergestellt. Das Schott 11 ist aus einem Kunststoff, bevorzugt einem glasfaserverstärkten Kunststoff ausgebildet und dient der Festigkeitserhöhung im Bereich der A-Säule. Insbesondere im Crash-Fall ist das Schott relevant, da es eine gezielte Verformung dieses Bereiches einleitet.

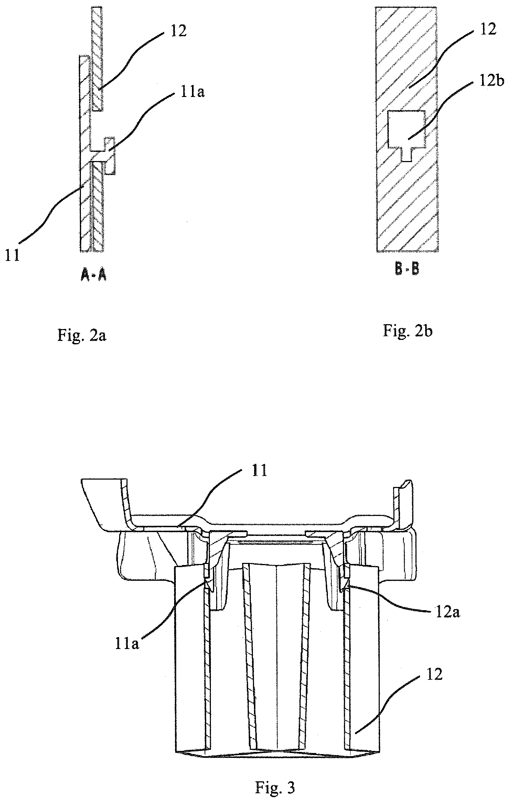

Fig. 2 zeigt eine Draufsicht auf eine Unterbaugruppe 14 gemäß der vorliegenden Erfindung. Diese wird in einem Vormontageprozess erzeugt, indem das Schott 11 an die Scharnierverstärkung 12 geclipst wird. Wie aus den Fig. 2, 2a und 2b ersichtlich ist, dringt beim Verclipsen ein Vorsprung 11a des Schotts 11 in eine Vertiefung, bzw. eine Ausnehmung 12a der Scharnierverstärkung ein und erzeugt eine formschlüssige Verbindung zwischen dem Schott 11 und der Scharnierverstärkung 12.

In einer weiteren, in Figur 3 dargestellten Ausführungsform der Erfindung, können solche Clips-Verbindungen auch als Verrastungen ausgebildet sein. In diesem Fall weist das Schott 11 eine Rastnase 11a auf, die in eine entsprechende Gegenhalterung an der Türschamierverstärkung 12 eingreift und mit dieser form- und/oder kraftschlüssig verrastet. Ein ungewolltes Lösen dieser Verbindung ist dadurch ausgeschlossen.

## Patentansprüche

1. Verfahren zum Herstellen einer Baugruppe (10) aus mindestens drei Bauteilen (11, 12, 13) mit den Schritten:
- Erzeugen einer Unterbaugruppe (14) durch Verbinden eines ersten Bauteils (11) mit einem zweiten Bauteil (12),
- Anordnen der Unterbaugruppe (14) an dem dritten Bauteil (13),
**dadurch gekennzeichnet, dass**
das erste Bauteil (11) und das zweite Bauteil (12) durch eine stoff- und/oder formschlüssige Verbindung miteinander verbunden werden und dass die Baugruppe (14) durch eine kraft- und/oder stoffschlüssige Verbindung an dem dritten Bauteil (13) angeordnet wird, wobei
das erste Bauteil (11) ein Schott, das zweite Bauteil (12) eine Scharnierverstärkung und das dritte Bauteil (13) eine A-Säule eines Kraftfahrzeugs ist.

2. Verfahren nach Anspruch 1, **dadurch gekennzeichnet, dass**
die stoff- und/oder formschlüssige Verbindung zwischen dem ersten und dem zweiten Bauteil (11, 12) durch eine Clipsverbindung erzeugt wird.

3. Verfahren nach einem der Ansprüche 1 oder 2, **dadurch**
**gekennzeichnet, dass**
die stoffschlüssige Verbindung zwischen der Unterbaugruppe (14) und dem dritten Bauteil (13) durch Kleben und/oder durch eine kraftschlüssige Verbindung, insbesondere einer Verschraubung, erzeugt wird.

4. Verfahren nach einem der vorhergehenden Ansprüche, **dadurch gekennzeichnet, dass**
die Bauteile (11, 12, 13) aus unterschiedlichen Materialien ausgebildet sind.

5. Verfahren nach einem der vorhergehenden Ansprüche, **dadurch gekennzeichnet, dass**
das erste Bauteil (11) aus Kunststoff, das zweite Bauteil (12) aus Aluminium und das dritte Bauteile aus faserverstärktem Kunststoff ausgebildet ist.

## Claims

1. A method for producing an assembly (10) from at least three components (11, 12, 13), having the steps:
- producing a subassembly (14) by connecting a first component (11) to a second component (12),
- arranging the subassembly (14) on the third component (13),
**characterised in that**
the first component (11) and the second component (12) are connected together by a material bond and/or positive connection, and **in that** the assembly (14) is arranged on the third component (13) by a non-positive connection and/or by a material bond connection, with
the first component (11) being a partition, the second component (12) being a hinge reinforcement and the third component (13) being an A-pillar of a motor vehicle.

2. A method according to Claim 1, **characterised in that**
the material bond and/or positive connection between the first and the second component (11, 12) is produced by a clip connection.

3. A method according to one of Claims 1 or 2, **characterised in that**
the material bond connection between the subassembly (14) and the third component (13) is produced by gluing and/or by a non-positive connection, especially a screw connection.

4. A method according to one of the preceding claims, **characterised in that** the components (11, 12, 13) are formed from different materials.

5. A method according to one of the preceding claims, **characterised in that** the first component (11) is made of plastics material, the second component (12) of aluminium and the third components of fibre-reinforced plastics material.

## Revendications

1. Procédé d'obtention d'un ensemble (10) constitué par au moins trois éléments (11, 12, 13) comprenant des étapes consistant à :
- obtenir un sous-ensemble (14) par liaison d'un premier élément (11) et d'un second élément (12),
- positionner ce sous ensemble (14) sur le troisième élément (13),
**caractérisé en ce que**
le premier élément (11) et le second élément (12) sont reliés par une liaison par la matière et/ou par une liaison par la forme, et
le sous ensemble (14) est monté sur le troisième élément (13) par une liaison par la force et/ou par une liaison par la matière, le premier élément (11) étant une cloison, le second élément (12) étant un renfort de charnière et le troisième élément (13) étant une colonne A de véhicule automobile.

2. Procédé conforme à la revendication 1,
**caractérisé en ce que**
la liaison par la matière et/ou la liaison par la forme entre le premier élément et le second élément (11, 12) est une liaison par enclipsage.

3. Procédé conforme à l'une des revendications 1 ou 2,
**caractérisé en ce que**
la liaison par la matière entre le sous ensemble (14) et le troisième élément (13) est obtenue par collage et/ou par une liaison par la force, en particulier un vissage.

4. Procédé conforme à l'une des revendications précédentes,
**caractérisé en ce que**
les éléments (11, 12, 13) sont réalisés en différents matériaux.

5. Procédé conforme à l'une des revendications précédentes,
**caractérisé en ce que**
le premier élément (11) est réalisé en un matériau synthétique, le second élément (12) est réalisé en aluminium et le troisième élément est réalisé en un matériau synthétique renforcé par des fibres.
